# EUROPÄISCHE PATENTSCHRIFT

(11) **EP 3 033 785 B1**
(45) Veröffentlichungstag und Bekanntmachung des Hinweises auf die Patenterteilung: **26.04.2017**
(21) Anmeldenummer: 14747833.3
(22) Anmeldetag: 16.07.2014
(51) Int. Cl.: H01M 2/20, H01H 37/76, H01H 85/04, H01H 85/20, H01M 2/34, H01H 85/02

(54) **SICHERUNGSVORRICHTUNG**
SECURING DEVICE
DISPOSITIF DE SÉCURITÉ

(30) Priorität: 16.08.2013 DE 102013013662
(43) Veröffentlichungstag der Anmeldung: 22.06.2016
(73) Patentinhaber: Audi AG, 85045 Ingolstadt (DE)
(72) Erfinder: SCHEMBERG, Florian, 85053 Ingolstadt (DE); RANZINGER, Roman, 85080 Gaimersheim (DE)
(74) Vertreter: Lehle, Josef
(86) Internationale Anmeldenummer: PCT/EP2014/001942
(87) Internationale Veröffentlichungsnummer: WO 2015/022045

(56) Entgegenhaltungen:
- WO-A1-91/05979
- JP-A- 2008 205 037
- US-A- 5 188 909
- US-A- 5 358 798
- US-A1- 2011 211 284

## Beschreibung

Die Erfindung betrifft eine Sicherungsvorrichtung für eine Anordnung aus wenigstens einem wenigstens ein elektrisches Kontaktelement aufweisenden elektrischen Bauteil, das ein elektrischer Energiespeicher ist, und wenigstens einem, insbesondere schienenartigen, elektrischen Verbindungselement, wobei das bauteilseitige Kontaktelement mittels eines elektrisch leitfähigen Klebers mit dem elektrischen Verbindungselement zu verbinden oder verbunden ist, wobei zwischen dem Bauteil und dem elektrischen Verbindungselement wenigstens ein Stellmittel angeordnet ist, über welches eine das Bauteil und das Verbindungselement auseinander bewegende Stellkraft ausübbar ist, wobei das Stellmittel als eine Druckfeder ausgebildet ist oder eine Druckfeder umfasst, wobei die Druckfeder ring- oder schraubenförmig ausgebildet ist.

Entsprechende Sicherungsvorrichtungen sind an und für sich bekannt und werden beispielsweise im Rahmen der Herstellung respektive des Zusammenbaus einer Energiespeicheranordnung, wobei typischerweise mehrere Energiespeicher, welche jeweils eine Anzahl an modul- oder stapelartig, in einem Energiespeichergehäuse zusammengefassten Energiespeicherzellen umfassen, mit einem, insbesondere schienenartigen, elektrischen Verbindungselement elektrisch zu verbinden sind, eingesetzt, um das für das Personal bestehende Verletzungspotential zu reduzieren. Das Verletzungspotential beruht typischerweise auf einer Falschmontage von Energiespeichern im Rahmen des Zusammenbaus der Energiespeicheranordnung, was auf einer Gefährdung durch Ausbildung elektrischer Kurzschlüsse und Bildung von Lichtbögen beruht.

Zwar sind aus dem Stand der Technik bestimmte technische Lösungen entsprechender Sicherungsvorrichtungen bekannt, welche den Zusammenbau entsprechender Energiespeicheranordnungen, d. h. insbesondere die elektrische Kontaktierung entsprechender Energiespeicher mit einem elektrischen Verbindungselement, allgemein die elektrische Verbindung eines elektrischen Bauteils mit einem elektrischen Verbindungselement, sicherer gestalten, gleichwohl besteht in diesem Bereich ein Weiterentwicklungsbedarf.

Die Druckschrift US 5 188 909 A offenbart eine elektrochemische Speicherzelle mit einer Einrichtung zur Stromkreisunterbrechung. Hierbei wird ein von der Speicherzelle weggerichteter Druck auf eine Verbindungselektrode ausgeübt und diese Elektrode ist über ein niedrig schmelzendes leitendes Material mit der elektrochemischen Speicherzelle verbunden. Schmilzt dieses Material, so wird die Elektrode von der Speicherzelle weggedrückt, womit der elektrische Kontakt unterbrochen wird.

Der Erfindung liegt die Aufgabe zugrunde, eine verbesserte Sicherungsvorrichtung anzugeben.

Die Aufgabe wird erfindungsgemäß durch eine Sicherungsvorrichtung der eingangs genannten Art gelöst, welche sich dadurch auszeichnet, dass die Druckfeder umgebend um das energiespeicherseitige Kontaktelement angeordnet ist.

Die erfindungsgemäße Sicherungsvorrichtung realisiert im Hinblick auf die für das Personal im Rahmen der elektrischen Kontaktierung bzw. Verbindung eines stromführenden elektrischen Bauteils mit einem elektrischen Verbindungselement, d. h. z. B. im Rahmen des Zusammenbaus einer Energiespeicheranordnung, d. h. insbesondere der elektrischen Kontaktierung entsprechender Energiespeicher mit einem elektrischen Verbindungselement, bestehenden Gefahren ein zusätzliches Maß an Sicherheit. Dies ergibt sich durch das wenigstens eine zwischen dem elektrischen Bauteil, d. h. dem Energiespeicher, und dem elektrischen Verbindungselement angeordnete Stellmittel, über welches eine das elektrische Bauteil, d. h. den Energiespeicher, und das elektrische Verbindungselement auseinander bewegende Stellkraft ausübbar ist. Die Stellkraft ist üblicherweise derart, dass eine mittels eines elektrisch leitfähigen Klebers gebildete, elektrische wie auch mechanische Verbindung zwischen dem bauteilseitigen Kontaktelement, bei welchem es sich beispielsweise um einen Zellpol handelt, und dem elektrischen Verbindungselement, bei welchem es sich typischerweise um eine Leiter- bzw. Stromschiene handelt, aufgehoben bzw. unterbrochen werden kann. Die über das Stellmittel ausübbare bzw. ausgeübte Stellkraft kann daher so groß sein, dass das Bauteil und das elektrische Verbindungselement derart räumlich auseinander bewegt werden, dass unter bestimmten Bedingungen eine mittels eines elektrisch leitfähigen Klebers gebildete elektrische (wie auch mechanische) Verbindung aufgehoben bzw. aufgebrochen wird. Dies bedeutet insbesondere, dass ein z. B. aufgrund einer Falschmontage erzeugter elektrischer Kurzschluss sowie der dabei typischerweise erzeugte Lichtbogen unterbrochen werden kann. Mithin ist die Gefahr von auf den elektrischen Kurzschluss und die dabei erzeugten hohen elektrischen Leistungen zurückzuführenden thermisch bedingten Beschädigungen des oder elektrischen Bauteile, d. h. z. B. eines oder mehrerer elektrischer Energiespeicher, bzw. des Verbindungselements, welche bis zu einem Brand führen können, reduziert. Ferner ist die Gefahr von auf den Lichtbogen zurückzuführenden thermischen Beschädigungen des oder der Bauteile bzw. des elektrischen Verbindungselements sowie thermischen Verletzungen des Personals reduziert.

Grundsätzlich ist für eine Ausübung der über das Stellmittel ausgeübten Stellkraft derart, dass diese zu einem Auseinanderbewegen entsprechender bauteilseitiger Kontaktelemente und einem entsprechenden elektrischen Verbindungselement führt, eine Aufhebung bzw. Schwächung der über den elektrisch leitfähigen Kleber aufgebrachten Klebekraft, allgemein Fügekraft, und der damit zusammenhängenden mechanischen Verbindung zwischen dem oder den bauteilseitigen Kontaktelementen und dem elektrischen Verbindungselement erforderlich. Die Aufhebung bzw. Schwächung der Klebekraft beruht insbesondere darauf, dass das Klebeverhalten des Klebers materialimmanent durch einen im Rahmen der elektrischen Kontaktierung bzw. Verbindung des elektrischen Bauteils mit dem elektrischen Verbindungselement, d. h. z. B. im Rahmen eines Zusammenbaus einer Energiespeicheranordnung, wobei energiespeicherseitige Kontaktelemente mit einem elektrischen Verbindungselement zu verbinden sind, auftretenden äußeren Einfluss, insbesondere elektrischen Kurzschluss, derart verändert wird, dass die Klebeeigenschaften bzw. die über den Kleber ausgeübte Klebekraft unmittelbar reduziert bzw. gegebenenfalls sogar aufgehoben wird. Dies kann beispielsweise durch ein Auflösen, Beschädigen, Erweichen, Verdampfen, Verspröden etc. des elektrisch leitfähigen Klebers erfolgen.

Bei dem elektrischen Bauteil handelt es sich um einen elektrischen Energiespeicher. Unter einem Energiespeicher ist erfindungsgemäß eine Energiespeicherzelle bzw. mehrere modul- oder stapelartig zusammengefasste Energiespeicherzellen zu verstehen. Die einzelnen Energiespeicherzellen sind typischerweise in einem Energiespeichergehäuse aufgenommen. Die in jeweiligen Energiespeichergehäusen aufgenommenen Energiespeicher sind typischerweise wiederum in einem einer Energiespeicheranordnung zugehörigen Gehäuseteil aufgenommen.

Das beschriebene Prinzip ist insbesondere von Nutzen, wenn der elektrisch leitfähige Kleber aus einem bei Überschreiten einer kleberspezifischen Erweichungstemperatur erweichenden Klebermaterial gebildet ist. Der elektrisch leitfähige Kleber bzw. die diesem eigene, spezifische Erweichungstemperatur ist vorteilhaft derart gewählt, dass die über den elektrisch leitfähigen Kleber zwischen dem bauteilseitigen Kontaktelement und dem elektrischen Verbindungselement ausgeübte Klebekraft zweckmäßig unterhalb der Erweichungstemperatur größer als die oder gleich der über das Stellmittel ausgeübte Stellkraft und oberhalb der Erweichungstemperatur kleiner als die über das Stellmittel ausgeübte Stellkraft ist. Das den elektrisch leitfähigen Kleber bildende Klebermaterial erweicht sonach bei Erreichen bzw. oberhalb der Erweichungstemperatur, d. h. es verliert seine originären Klebeeigenschaften, was in einer Abnahme der über den Kleber aufgebrachten Klebekraft resultiert. Die über den elektrisch leitfähigen Kleber hergestellte elektrisch leitfähige wie auch mechanische Verbindung zwischen dem oder den bauteilseitigen Kontaktelementen und dem elektrischen Verbindungselement verliert dadurch sowohl in elektrischer als auch in mechanischer Hinsicht an Stabilität. Durch die Abnahme der Klebekraft ist es über die über das Stellmittel ausgeübte Stellkraft möglich, die zuvor bestehende elektrische und mechanische Verbindung zwischen den bauteilseitigen Kontaktelementen und dem elektrischen Verbindungselement zu überwinden. Dies bedeutet im Umkehrschluss, dass die über den Kleber unterhalb der Erweichungstemperatur hergestellte Klebekraft derart hoch ist, dass sie die über das Stellmittel ausgeübte Stellkraft übertrifft oder zumindest kompensiert. Über die über das Stellmittel ausgeübte Stellkraft ist es hier nicht möglich, die bestehende elektrische wie auch mechanische Verbindung zwischen den bauteilseitigen Kontaktelementen und dem elektrischen Verbindungselement zu überwinden. Das Erreichen bzw. Überschreiten der kleberspezifischen Erweichungstemperatur, worunter selbstverständlich auch ein entsprechender Temperaturbereich zu verstehen sein kann, tritt, wie erwähnt, z. B. in Fällen eines, insbesondere auf einem aus einem falschen Zusammenbau entsprechender als Energiespeicher ausgebildeter Bauteile resultierenden, elektrischen Kurzschlusses auf, welcher zu einer kurzzeitigen drastischen Temperaturerhöhung auf Temperaturen (weit) oberhalb der kleberspezifischen Erweichungstemperatur und somit zu einem Erweichen, gegebenenfalls Auflösen bzw. Beschädigen, des Klebers führt.

Allgemein ist unter der Erweichungstemperatur sonach eine Temperatur zu verstehen, bei der sich die Klebeeigenschaften des elektrisch leitfähigen Klebers und die durch diese bedingten Klebekräfte erheblich ändern, d. h. abnehmen bzw. sich verschlechtern. Dies kann bei Vorliegen eines auf einen elektrischen Kurzschluss zurückzuführenden hohen Temperaturanstiegs binnen wenigen Sekunden, insbesondere auch binnen Bruchteilen von Sekunden, erfolgen.

Der elektrisch leitfähige Kleber kann thermisch aushärtbar sein, wobei die Aushärtung bzw. eine Initiierung des Aushärtevorgangs bei Überschreiten einer kleberspezifischen Aushärtetemperatur erfolgt. Um eine hinreichende elektrische wie auch mechanische Verbindung zwischen den bauteilseitigen Kontaktelementen und dem elektrischen Verbindungselement herzustellen bzw. aufrechtzuerhalten, ist es in dieser möglichen Ausführungsform der Erfindung sonach erforderlich, dass der Kleber zumindest kurzzeitig, wobei die sich die Zeit insbesondere nach der kleberspezifischen Zusammensetzung bemisst, mit einer Temperatur oberhalb seiner kleberspezifischen Aushärtetemperatur beaufschlagt wird. Typischerweise findet durch den Temperatureintrag ein physikalisch bzw. chemischer Vorgang, z. B. eine Vernetzungsreaktion, statt, der zur Ausbildung einer hinreichenden, d. h. oberhalb der durch das Stellmittel ausübbaren bzw. ausgeübten Stellkraft liegenden mechanischen Füge- bzw. Klebekraft führt. Eine zu einem weiteren bzw. vollständigen Aushärten des Klebers erforderliche Temperaturbeaufschlagung ist in diesem Zusammenhang nicht zwingend erforderlich, es genügt auch eine initiale Teilaushärtung des Klebers, sofern diese eine hinreichend stabile mechanische Verbindung zwischen den energiespeicherseitigen Kontaktelementen und dem elektrischen Verbindungselement sicherstellt. Durch die nicht vollständige Aushärtung des elektrisch leitfähigen Klebers führt die elektrische Verbindung zwischen dem elektrischen Bauteil und dem elektrischen Verbindungselement typischerweise weniger Strom als in einem vollständig ausgehärteten Zustand. Die Sicherungsvorrichtung löst daher bei einer Teilaushärtung des Klebers, z. B. während der Montage einer Energiespeicheranordnung, frühzeitig aus, was einen hohen Schutz für das Personal darstellt. Die über den teilausgehärteten Kleber gebildete elektrische Verbindung ist jedoch typischerweise so stabil, dass Prüfungen, wie z. B. Bandentests, durchführbar sind.

Die Restaushärtung kann im Weiteren, d. h. insbesondere für den Fall eines als Energiespeicher ausgebildeten Bauteils, z. B. während des Transports zu einer Anwendung, wie z. B. zu einem Kraftfahrzeug, erfolgen. Typischerweise ist die Aushärtung des Klebers bei Einbau in eine Anwendung vollständig abgeschlossen. Der Energiespeicher steht sonach mit voller Leistungsfähigkeit zur Verfügung.

Im Falle eines thermisch aushärtbaren elektrisch leitfähigen Klebers ist dieser zweckmäßig derart ausgebildet bzw. beschaffen, dass die Aushärtetemperatur unterhalb der Erweichungstemperatur liegt. Die Erweichungstemperatur kann beispielsweise im Bereich von ca. 100°C, die Aushärtetemperatur kann beispielsweise im Bereich von ca. 70°C liegen. Der elektrisch leitfähige Kleber ist typischerweise derart beschaffen, dass die Aushärtung des Klebers bei höheren Temperaturen deutlich schneller als bei niedrigen Temperaturen, z. B. bei Raumtemperatur (ca. 25°C), erfolgt. Entsprechend kann eine Aushärtung des elektrisch leitfähigen Klebers grundsätzlich auch bei niedrigen Temperaturen, z. B. bei Raumtemperatur, erfolgen, diese nimmt jedoch mehr Zeit in Anspruch.

Der elektrisch leitfähige Kleber kann demnach insbesondere aus einem thermoplastischen, gegebenenfalls thermisch aushärtbaren bzw. vernetzbaren, Kunststoff gebildet sein oder einen solchen thermoplastischen Kunststoff umfassen.

Die elektrisch leitfähigen Eigenschaften des elektrisch leitfähigen Klebers, insbesondere auch des aus einem thermoplastischen Kunststoff gebildeten, elektrisch leitfähigen Klebers, können insbesondere durch in diesem verteilte elektrisch leitfähige Partikel, wie z. B. Graphit- oder Silberpartikel, und/oder durch materialimmanente elektrisch leitfähige Eigenschaften, wie z. B. bei einem auf einem elektrisch leitfähigen Thermoplasten basierenden oder gebildeten elektrisch leitfähigen Kleber, gegeben sein. In letzterem Fall kann der elektrisch leitfähige Kleber z. B. auf einem Polyanilin basieren.

Das Stellmittel ist als eine Druckfeder ausgebildet oder umfasst eine Druckfeder. Die Druckfeder ist derart ausgelegt bzw. konstruiert, dass eine entsprechende Stellkraft bzw. Federkraft ausübbar ist, welche bei einer Reduzierung der über den elektrisch leitfähigen Kleber ausgeübten Klebekraft ein, insbesondere schnelles bzw. plötzliches, Auseinanderbewegen der bauteilseitigen Kontaktelemente und des elektrischen Verbindungselements bedingt. Im Hinblick auf eine konkrete Anwendungssituation gewünschte Federeigenschaften, d. h. insbesondere eine gewünschte Federhärte, lassen sich insbesondere durch die Materialwahl, die Konstruktion und die damit zusammenhängende Vorspannung der Druckfeder einstellen.

Die Druckfeder ist insbesondere aus einem elektrisch isolierenden Material, wie z. B. einem Elastomer, gebildet. Bei dem Elastomer kann es sich um z. B. um einen natürlichen oder synthetischen Kautschuk handeln. Die Druckfeder ist ring- oder schraubenförmig ausgebildet und dieses umgebend um das bauteilseitige Kontaktelement angeordnet. Die das energiespeicherseitige Kontaktelement umgebende Anordnung der Druckfeder trägt zu einem möglichst kompakten Aufbau der Energiespeicheranordnung bei. Gleichermaßen ist die Druckfeder derart unverlierbar an der Energiespeicheranordnung gelagert.

Bevorzugt ist die Druckfeder höher als das bauteilseitige Kontaktelement ausgebildet, so dass diese komprimiert werden muss, um eine elektrische wie auch mechanische Verbindung zwischen dem Bauteil, d. h. z. B. einem Energiespeicher, d. h. einem energiespeicherseitigen Kontaktelement, und dem elektrischen Verbindungselement herzustellen. Die Druckfeder ragt sonach insbesondere in ihrem nicht komprimierten Zustand typischerweise um ein gewisses Maß axial über das bauteil- bzw. energiespeicherseitige Kontaktelement hinaus.

Um die Sicherheit gegenüber der Ausbildung bzw. Erzeugung von elektrischen Kurzschlüssen und entsprechenden Lichtbögen zu erhöhen, kann ein der Sicherungsvorrichtung zugehöriges Gehäuseteil mit wenigstens einem elektrisch isolierenden Schutzgas befüllt sein. Konkret kann es sich bei dem Schutzgas beispielsweise um Schwefelhexafluorid (SF₆) handeln.

Die Erfindung betrifft ferner eine Energiespeicheranordnung, umfassend eine wie vorstehend beschriebene Sicherungsvorrichtung. Die Energiespeicheranordnung umfasst insbesondere wenigstens einen wenigstens ein elektrisches Kontaktelement aufweisenden elektrischen Energiespeicher und wenigstens ein, insbesondere schienenartiges, elektrisches Verbindungselement, wobei das energiespeicherseitige Kontaktelement mittels eines elektrisch leitfähigen Klebers mit dem elektrischen Verbindungselement verbunden ist. Die Energiespeicheranordnung zeichnet sich dadurch aus, dass zwischen dem Energiespeicher und dem elektrischen Verbindungselement wenigstens ein Stellmittel angeordnet ist, über welches eine den Energiespeicher und das Verbindungselement auseinander bewegende Stellkraft ausübbar ist.

Die Erfindung betrifft ferner ein Verfahren zum elektrischen Kontaktieren eines elektrischen Kontaktelements eines elektrischen Bauteils, nämlich eines elektrischen Energiespeichers, mit einem elektrischen Verbindungselement mittels eines elektrisch leitfähigen Klebers. Zwischen dem Bauteil und dem elektrischen Verbindungselement wird wenigstens ein Stellmittel angeordnet wird, über welches eine das Bauteil und das elektrische Verbindungselement auseinander bewegende Stellkraft ausübbar ist, wobei das Stellmittel im Rahmen der elektrischen Kontaktierung des bauteilseitigen Kontaktelements mit dem elektrischen Verbindungselement entgegen der von dem Stellmittel ausgeübten Stellkraft komprimiert wird, wobei ein als eine Druckfeder ausgebildetes oder eine Druckfeder umfassendes Stellmittel verwendet wird, wobei eine ring- oder schraubenförmig ausgebildete Druckfeder verwendet wird, wobei die Druckfeder umgebend um das energiespeicherseitige Kontaktelement angeordnet wird.

Bezüglich der erfindungsgemäßen Energiespeicheranordnung wie auch bezüglich des erfindungsgemäßen Verfahrens gelten sonach sämtliche Ausführungen bezüglich der erfindungsgemäßen Sicherungsvorrichtung analog.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer Sicherungsvorrichtung gemäß einem Ausführungsbeispiel der Erfindung;
- Fig. 2: eine weitere Prinzipdarstellung der in Fig. 1 gezeigten Sicherungsvorrichtung; und
- Fig. 3: eine Schnittansicht durch eine Energiespeicheranordnung gemäß einem Ausführungsbeispiel der Erfindung.

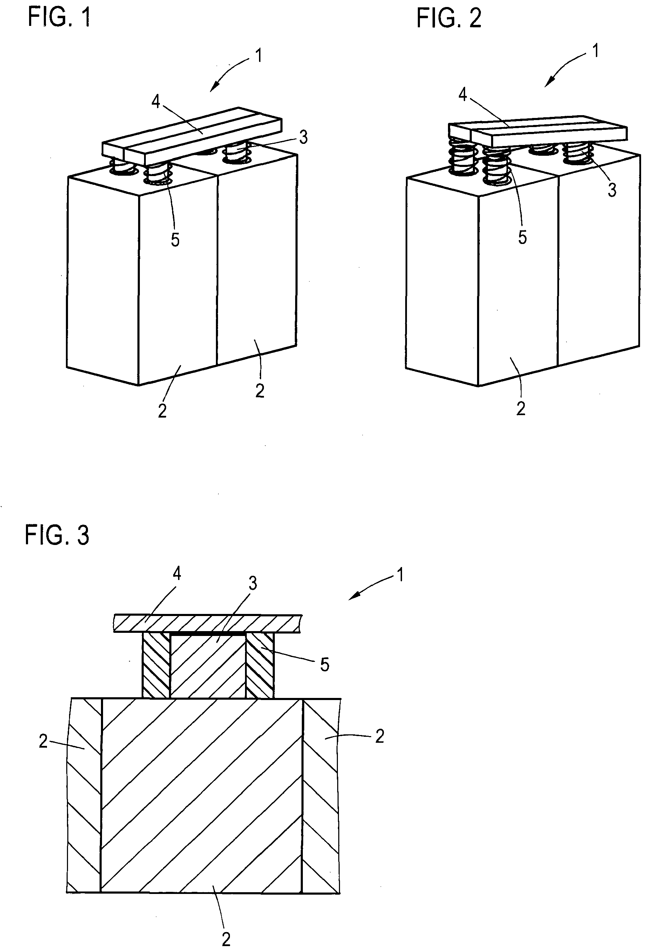

Fig. 1 zeigt eine Prinzipdarstellung einer Sicherungsvorrichtung 1 gemäß einem Ausführungsbeispiel der Erfindung. Die Sicherungsvorrichtung 1 ist einer Energiespeicheranordnung zugeordnet. Die Energiespeicheranordnung ist beispielsweise zur Versorgung eines elektrischen Antriebsmotors eines Kraftfahrzeugs (jeweils nicht gezeigt) vorgesehen. Die Energiespeicheranordnung kann sonach als Traktionsbatterie bezeichnet werden.

Die Energiespeicheranordnung umfasst eine Anzahl an elektrischen Bauteilen in Form von Energiespeichern 2. In Fig. 1 sind repräsentativ lediglich zwei Energiespeicher 2 gezeigt, die Energiespeicheranordnung kann jedoch selbstverständlich mehr als die beiden Energiespeicher 2 umfassen. Die Energiespeicher 2 bestehen jeweils aus modul- oder stapelartig zusammengefassten Energiespeicherzellen (nicht gezeigt), insbesondere Lithium-Zellen, welche in jeweiligen Energiespeichergehäusen aufgenommen sind. Die Energiespeicher 2 weisen jeweils elektrische Kontaktelemente 3 in Form von Energiespeicherpolen bzw. Zellpolen auf. Die Kontaktelemente 3 ragen ober- bzw. stirnseitig von den jeweiligen Energiespeichern 2 ab.

Die Energiespeicher 2 sind im Rahmen des Zusammenbaus der Energiespeicheranordnung mit einem elektrischen Verbindungselement 4 in Form einer Leiter- oder Stromschiene zu verbinden bzw. verbunden worden. Die elektrische Verbindung zwischen den jeweiligen Energiespeichern 2 und dem elektrischen Verbindungselement 4 erfolgt über die jeweiligen energiespeicherseitigen Kontaktelemente 3. Die elektrische wie auch mechanische Verbindung zwischen den energiespeicherseitigen Kontaktelementen 3 und dem elektrischen Verbindungselement 4 erfolgt mittels Leitklebens, d. h. über einen elektrisch leitfähigen Kleber. Mithin sind insbesondere die freiliegenden, dem elektrischen Verbindungselement 4 zugewandten Flächen der energiespeicherseitigen Kontaktelemente 3 mit dem Kleber zu benetzen bzw. benetzt.

Ersichtlich ist zwischen den Energiespeichern 2 und dem elektrischen Verbindungselement 4 ein Stellmittel 5 in Form einer aus einem elektrisch isolierenden Elastomermaterial gebildeten, schraubenförmigen Druckfeder angeordnet. Typischerweise ist jedem energiespeicherseitigen Kontaktelement 3 ein entsprechendes Stellmittel zugeordnet. Das Stellmittel 5 liegt mit seiner dem Energiespeicher 2 zugewandten Stirnfläche an einem Flächenabschnitt des Energiespeichers 2 und mit seiner dem elektrischen Verbindungselement 4 zugewandten Stirnfläche an einem Flächenabschnitt des elektrischen Verbindungselements 4 an. Das Stellmittel 5 umgibt die typischerweise querschnittlich betrachtet zylindrischen Kontaktelemente 3. Im nicht komprimierten Zustand überragt das Stellmittel 5 die Kontaktelemente 3 bezogen auf deren Symmetrieachse axial. Das Stellmittel 5 ist sonach in seinem nicht komprimierten Zustand höher als ein jeweiliges Kontaktelement 3.

Über das Stellmittel 5 ist eine Stellkraft ausübbar. Die Stellkraft ist derart gerichtet, dass sie ein Auseinanderbewegen des jeweiligen Energiespeichers 2 respektive der diesem zugehörigen Kontaktelemente 3 und des Verbindungselements 4 und somit eine Unterbrechung der elektrischen wie auch mechanischen Verbindung zwischen den energiespeicherseitigen Kontaktelementen 3 und dem elektrischen Verbindungselement 4 ermöglicht (vgl. Fig. 2). Dies führt dazu, dass das elektrische Verbindungselement 4 stromfrei ist. Die Ausbildung von elektrischen Kurzschlüssen bzw. damit einhergehender Lichtbögen ist dadurch unterbrochen bzw. unterbunden. Hierfür ist es jedoch erforderlich, dass die über das Stellmittel 5 ausgeübte Stellkraft größer als die durch den elektrisch leitfähigen Kleber ausgeübte Füge- bzw. Klebekraft ist. Da die Energiespeicher 2 typischerweise feststehend bzw. unbeweglich in einem der Energiespeicheranordnung zugehörigen Gehäuseteil gelagert sind, ist es über die über ein jeweiliges Stellmittel 5 ausübbare Stellkraft typischerweise nur möglich, das elektrische Verbindungselement 4 von den Energiespeichern 2 respektive den energiespeicherseitigen Kontaktelementen 3 wegzubewegen bzw. wegzudrücken.

Im Allgemeinen ist für eine Ausübung der über das Stellmittel 5 ausgeübten Stellkraft derart, dass diese zu einem Auseinanderbewegen der energiespeicherseitigen Kontaktelemente 3 und dem elektrischen Verbindungselement 4 führt, eine Aufhebung bzw. Schwächung der über den elektrisch leitfähigen Kleber aufgebrachten Klebekraft und der damit zusammenhängenden mechanischen Verbindung zwischen den energiespeicherseitigen Kontaktelementen 3 und dem elektrischen Verbindungselement 4 erforderlich. Die Aufhebung bzw. Schwächung der Klebekraft beruht insbesondere darauf, dass das Klebeverhalten des elektrisch leitfähigen Klebers materialimmanent durch einen im Rahmen eines Zusammenbaus der Energiespeicheranordnung auftretenden äußeren Einfluss, insbesondere elektrischen Kurzschluss, derart verändert wird, dass die Klebeeigenschaften bzw. die über den elektrisch leitfähigen Kleber ausgeübte Klebekraft unmittelbar reduziert bzw. aufgehoben wird.

Der elektrisch leitfähige Kleber ist typischerweise aus einem Klebermaterial gebildet, welches bei Überschreiten bei einer kleberspezifischen Erweichungstemperatur, worunter selbstverständlich auch ein bestimmter Temperaturbereich zu verstehen sein kann, erweicht und somit seine Klebeeigenschaften, wie vorstehend beschrieben, verändert. Die Klebeeigenschaften und die über den Kleber aufgebrachte Klebekraft wird oberhalb der Erweichungstemperatur derart reduziert, dass die über den Kleber ausgeübte Klebekraft geringer als die über das Stellmittel 5 ausgeübte Stellkraft ist, so dass das elektrische Verbindungselement 4 von den energiespeicherseitigen Kontaktelementen 3 entfernt, d. h. derart beabstandet wird, dass eine elektrische Verbindung zwischen diesen aufgehoben ist. Die Erweichungstemperatur kann insbesondere durch eine Falschmontage der Energiespeicher 2 und einen dabei entstehenden elektrischen Kurzschluss erreicht werden. Mithin ist durch die Sicherungsvorrichtung 1 eine Kurzschlusssicherung realisiert, welche bei Vorliegen eines elektrischen Kurzschlusses eine elektrische Trennung des elektrischen Verbindungselements 4 von den Energiespeichern 2 respektive den energiespeicherseitigen Kontaktelementen 3 ermöglicht.

Konkret kann es sich bei dem elektrisch leitfähigen Kleber um einen auf einem thermoplastischen Kunststoff basierenden Klebstoff mit darin dispergierten bzw. verteilten elektrisch leitfähigen Partikeln, d. h. insbesondere metallischen Partikeln, wie z. B. Silberpartikeln, handeln. Die elektrisch leitfähigen Partikel können durch das Komprimieren des Klebers im Rahmen des Fügeprozesses zwischen den energiespeicherseitigen Kontaktelementen 3 und dem elektrischen Verbindungselement 4 derart angeordnet werden, dass diese elektrisch leitfähige Pfade bilden.

Der elektrisch leitfähige Kleber kann thermisch aushärtbar sein. Die Aushärtung des Klebers erfolgt bei Überschreiten einer kleberspezifischen Aushärtetemperatur. Der elektrisch leitfähige Kleber ist typischerweise derart beschaffen, dass die Aushärtung des Klebers bei höheren Temperaturen deutlich schneller als bei niedrigen Temperaturen, z. B. bei Raumtemperatur, erfolgt. Entsprechend kann eine Aushärtung des Klebers grundsätzlich auch bei niedrigen Temperaturen, z. B. bei Raumtemperatur, erfolgen, diese nimmt jedoch mehr Zeit in Anspruch.

Die Aushärtetemperatur des elektrisch leitfähigen Klebers liegt typischerweise deutlich unterhalb der Erweichungstemperatur des Klebers. Die Aushärtetemperatur ist typischerweise durch die Zusammensetzung des Klebers bestimmt. Beispielsweise kann diese in einem Bereich von 70°C liegen. Hierbei ist es sonach erforderlich, dass der Kleber zumindest kurzzeitig, wobei die sich die Zeit insbesondere nach der kleberspezifischen Zusammensetzung bemisst, mit einer Temperatur oberhalb seiner kleberspezifischen Aushärtetemperatur beaufschlagt wird. Typischerweise findet durch den Temperatureintrag ein chemischer bzw. physikalischer Vorgang, z. B. eine Vernetzungsreaktion, statt, der zu einer schnellen Ausbildung einer hinreichenden, d. h. oberhalb der durch das Stellmittel ausübbaren bzw. ausgeübten Stellkraft liegenden mechanischen Füge- bzw. Klebekraft führt. Eine zu einem vollständigen Aushärten des Klebers erforderliche Temperaturbeaufschlagung ist nicht zwingend erforderlich, es genügt auch eine Teilaushärtung, sofern diese eine hinreichend stabile mechanische Verbindung zwischen den energiespeicherseitigen Kontaktelementen 3 und dem elektrischen Verbindungselement 4 sicherstellt.

Insbesondere ist sonach eine kontrollierte Aushärtung des elektrisch leitfähigen Klebers in zwei Phasen möglich. Nach der Aufbringung des Klebers auf entsprechende seitens der energiespeicherseitigen Kontaktelemente 3 und des elektrischen Verbindungselements 4 vorgesehene Fügeflächen erfolgt in einer ersten Phase ein mechanisches Fügen bzw. Kontaktieren der energiespeicherseitigen Kontaktelemente 3 mit dem elektrischen Verbindungselement 4. Hierbei ist typischerweise ein Komprimieren bzw. Zusammendrücken des Stellmittels 5 entgegen der von diesem ausgeübten Stellkraft notwendig. Durch gezielte Zuführung von thermischer Energie bzw. Wärme, beispielsweise mittels eines Heißgebläses, kann in kurzer Zeit ein bestimmter Aushärtegrad des Klebers erreicht werden, so dass eine Klebekraft realisiert ist, welche die über das Stellmittel 5 ausgeübte Stellkraft ausgleicht, so dass eine elektrische wie auch mechanische Kontaktierung bzw. Verbindung zwischen den energiespeicherseitigen Kontaktelementen 3 und dem elektrischen Verbindungselement 4 hergestellt ist. Die weitere, gegebenenfalls vollständige, Aushärtung des Klebers kann in einer zweiten Phase ohne Zufuhr thermischer Energie, d. h. bei Umgebungsbedingungen, insbesondere bei Raumtemperatur (ca. 25°C), erfolgen.

Durch die nicht vollständige Aushärtung des elektrisch leitfähigen Klebers führt die elektrische Verbindung zwischen dem Energiespeicher 2 und dem elektrischen Verbindungselement 4 typischerweise weniger Strom als in einem vollständig ausgehärteten Zustand. Die Sicherungsvorrichtung 1 löst daher bei einer Teilaushärtung des Klebers, z. B. während der Montage einer Energiespeicheranordnung, frühzeitig aus, was einen hohen Schutz für das Personal darstellt. Die über den teilausgehärteten Kleber gebildete elektrische Verbindung ist jedoch typischerweise so stabil, dass Prüfungen, wie z. B. Bandentests, durchführbar sind.

Die Restaushärtung des Klebers kann im Weiteren, d. h. z. B. während des Transports der mit dem elektrischen Verbindungselement 4 verbundenen Energiespeicher 2 zu einer Anwendung, wie z. B. zu einem Kraftfahrzeug, erfolgen. Typischerweise ist die Aushärtung des Klebers bei Einbau in eine Anwendung vollständig abgeschlossen. Die Energiespeicher 2 stehen sonach mit voller Leistungsfähigkeit zur Verfügung.

Die Sicherungsvorrichtung 1 umfasst typischerweise ein Gehäuseteil (nicht gezeigt), in welchem die Energiespeicher 2 und das elektrische Verbindungselement 4 aufgenommen sind. Das Gehäuseteil ist zweckmäßig mit einem elektrisch isolierenden Medium, d. h. insbesondere einem elektrisch isolierenden Gas, wie z. B. Schwefelhexafluorid (SF₆), befüllt.

Fig. 3 zeigt eine Schnittansicht durch eine Energiespeicheranordnung gemäß einem Ausführungsbeispiel der Erfindung. Bei dem in Fig. 3 gezeigten Ausführungsbeispiel ist das Stellmittel 5 nicht als schraubenförmige, sondern als ringförmige Druckfeder ausgebildet. Der Innendurchmesser des Stellmittels 5 ist dabei an den Außendurchmesser des von diesem umgebenen energiespeicherseitigen Kontaktelements 3 angepasst. Mithin kann das ringförmige Stellmittel 5, insbesondere formschlüssig, auf das energiespeicherseitige Kontaktelement 3 aufgeschoben sein. Auch in diesem Zusammenhang gilt, dass das Stellmittel 5 im nicht komprimierten Zustand axial betrachtet höher ausgebildet ist, als das energiespeicherseitige Kontaktelement 3. Der elektrisch leitfähige Kleber ist hier durch eine im Vergleich stärker gezeichnete Linie dargestellt.

## Patentansprüche

1. Sicherungsvorrichtung (1) für eine Anordnung aus wenigstens einem wenigstens ein elektrisches Kontaktelement aufweisenden elektrischen Bauteil, das ein elektrischer Energiespeicher ist, und wenigstens einem, insbesondere schienenartigen, elektrischen Verbindungselement (4), wobei das bauteilseitige Kontaktelement mittels eines elektrisch leitfähigen Klebers mit dem elektrischen Verbindungselement (4) zu verbinden oder verbunden ist, wobei zwischen dem Bauteil und dem elektrischen Verbindungselement (4) wenigstens ein Stellmittel (5) angeordnet ist, über welches eine das Bauteil und das Verbindungselement (4) auseinander bewegende Stellkraft ausübbar ist, wobei das Stellmittel (5) als eine Druckfeder ausgebildet ist oder eine Druckfeder umfasst, wobei die Druckfeder ring- oder schraubenförmig ausgebildet ist,
**dadurch gekennzeichnet,**
**dass** die Druckfeder umgebend um das energiespeicherseitige Kontaktelement (3) angeordnet ist.

2. Sicherungsvorrichtung nach Anspruch 1,
**dadurch gekennzeichnet,**
**dass** der elektrisch leitfähige Kleber aus einem bei Überschreiten einer kleberspezifischen Erweichungstemperatur erweichenden Klebermaterial gebildet ist, wobei die über den elektrisch leitfähigen Kleber zwischen dem bauteilseitigen Kontaktelement und dem Verbindungselement (4) ausgeübte Klebekraft unterhalb der Erweichungstemperatur größer als die oder gleich der über das Stellmittel (5) ausgeübten Stellkraft und oberhalb der Erweichungstemperatur kleiner als die über das Stellmittel (5) ausgeübte Stellkraft ist.

3. Sicherungsvorrichtung nach einem der vorangehenden Ansprüche,
**dadurch gekennzeichnet,**
**dass** der elektrisch leitfähige Kleber thermisch aushärtbar ist, wobei bei Überschreiten einer kleberspezifischen Aushärtetemperatur eine Initiierung des Aushärtevorgangs erfolgt.

4. Sicherungsvorrichtung nach Anspruch 2 und 3,
**dadurch gekennzeichnet,**
**dass** die Aushärtetemperatur unterhalb der Erweichungstemperatur liegt.

5. Sicherungsvorrichtung nach einem der vorangehenden Ansprüche
**dadurch gekennzeichnet,**
**dass** der elektrisch leitfähige Kleber aus einem thermoplastischen Kunststoff gebildet ist oder einen thermoplastischen Kunststoff umfasst.

6. Sicherungsvorrichtung nach einem der vorangehenden Ansprüche,
**dadurch gekennzeichnet,**
**dass** die Druckfeder aus einem elektrisch isolierenden Material, insbesondere einem Elastomer, gebildet ist.

7. Sicherungsvorrichtung nach einem der vorangehenden Ansprüche,
**dadurch gekennzeichnet,**
**dass** sie ein mit einem elektrisch isolierenden Schutzgas befülltes Gehäuseteil aufweist.

8. Energiespeicheranordnung, umfassend eine Sicherungsvorrichtung (1) nach einem der vorangehenden Ansprüche.

9. Verfahren zur elektrischen Kontaktierung eines elektrischen Kontaktelements eines elektrischen Bauteils, nämlich eines elektrischen Energiespeichers (2), mit einem elektrischen Verbindungselement (4) mittels eines elektrisch leitfähigen Klebers, wobei zwischen dem Bauteil und dem elektrischen Verbindungselement (4) wenigstens ein Stellmittel (5) angeordnet wird, über welches eine das Bauteil und das Verbindungselement (4) auseinander bewegende Stellkraft ausübbar ist, wobei das Stellmittel (5) im Rahmen der elektrischen Kontaktierung des Kontaktelements mit dem Verbindungselement (4) entgegen der von diesem ausgeübten Stellkraft komprimiert wird, wobei ein als eine Druckfeder ausgebildetes oder eine Druckfeder umfassendes Stellmittel (5) verwendet wird, wobei eine ring- oder schraubenförmig ausgebildete Druckfeder verwendet wird,
**dadurch gekennzeichnet,**
**dass** die Druckfeder umgebend um das energiespeicherseitige Kontaktelement (3) angeordnet wird.

10. Verfahren nach Anspruch 9,
**dadurch gekennzeichnet,**
**dass** ein aus einem bei Überschreiten einer kleberspezifischen Erweichungstemperatur erweichenden Klebermaterial gebildeter elektrisch leitfähiger Kleber verwendet wird, wobei die über den elektrisch leitfähigen Kleber zwischen dem bauteilseitigen Kontaktelement und dem Verbindungselement (4) ausgeübte Klebekraft unterhalb der Erweichungstemperatur größer als die oder gleich der über das Stellmittel (5) ausgeübten Stellkraft und oberhalb der Erweichungstemperatur kleiner als die über das Stellmittel (5) ausgeübte Stellkraft ist.

11. Verfahren nach Anspruch 9 oder 10,
**dadurch gekennzeichnet,**
**dass** ein thermisch aushärtbarer elektrisch leitfähiger Kleber verwendet wird, wobei bei Überschreiten einer kleberspezifischen Aushärtetemperatur eine Initiierung des Aushärtevorgangs erfolgt.

12. Verfahren nach Anspruch 10 und 11,
**dadurch gekennzeichnet,**
**dass** die Aushärtetemperatur unterhalb der Erweichungstemperatur liegt.

13. Verfahren nach einem der Ansprüche 9 bis 12,
**dadurch gekennzeichnet,**
**dass** nach Aufbringung des elektrisch leitfähigen Klebers auf entsprechende seitens der bauteilseitigen Kontaktelemente und des elektrischen Verbindungselements (4) vorgesehene Fügeflächen in einer ersten Phase ein mechanisches Fügen bzw. Kontaktieren der bauteilseitigen Kontaktelemente mit dem elektrischen Verbindungselement (4) und eine Teilaushärtung des elektrisch leitfähigen Klebers, insbesondere unter Zufuhr energiereicher Strahlung, bevorzugt Wärmestrahlung, erfolgt, so dass eine Klebekraft realisiert wird, welche die über das Stellmittel (5) ausgeübte Stellkraft ausgleicht, so dass eine elektrische wie auch mechanische Kontaktierung bzw. Verbindung zwischen den bauteilseitigen Kontaktelementen und dem elektrischen Verbindungselement (4) hergestellt wird und eine weitere, gegebenenfalls vollständige, Aushärtung des elektrisch leitfähigen Klebers in einer auf die erste Phase folgenden zweiten Phase, insbesondere ohne Zufuhr energiereicher Strahlung, erfolgt.

## Claims

1. Securing device (1) for an arrangement comprising at least one electrical component, which is an electrical energy storage unit and has at least one electrical contact element, and at least one, in particular rail-like, electrical connection element (4), wherein the contact element on the component is to be connected or is connected to the electrical connection element (4) by means of an electrically conductive adhesive, wherein at least one actuating means (5), by means of which an actuating force that moves the component and the connection element (4) away from one another can be exerted, is arranged between the component and the electrical connection element (4), wherein the actuating means (5) is configured as a compression spring or comprises a compression spring, wherein the compression spring is configured in the shape of a ring or screw,
**characterised in that** the compression spring is arranged circumferentially around the contact element (3) on the energy storage unit.

2. Securing device according to claim 1,
**characterised in that**
the electrically conductive adhesive is formed from an adhesive material which softens when an adhesive-specific softening temperature is exceeded, the adhesive force exerted between the contact element on the component and the connecting element (4) by means of the electrically conductive adhesive being greater than or equal to the actuating force exerted by the actuating means (5) when below the softening temperature, and less than the actuating force exerted by the actuating means (5) when above the softening temperature.

3. Securing device according to any one of the preceding claims,
**characterised in that**
the electrically conductive adhesive is thermally curable, wherein initiation of the curing process takes place when an adhesive-specific curing temperature is exceeded.

4. Securing device according to claims 2 and 3,
**characterised in that**
the curing temperature lies below the softening temperature.

5. Securing device according to any one of the preceding claims,
**characterised in that**
the electrically conductive adhesive is formed from a thermoplastic material or comprises a thermoplastic material.

6. Securing device according to anyone of the preceding claims,
**characterised in that**
the compression spring is formed from an electrically insulating material, in particular an elastomer.

7. Securing device according to any one of the preceding claims,
**characterised in that**
it comprises a housing part filled with an electrically insulating protective gas.

8. Energy storage arrangement, comprising a securing device (1) according to any one of the preceding claims.

9. Method for the electrical contacting of an electrical contact element of an electrical component, namely an electrical energy storage unit (2), having an element (4) for electrical connection by means of an adhesive, wherein at least one actuating means (5), by means of which an actuating force that moves the component and the connection element (4) away from one another can be exerted, is arranged between the component and the electrical connection element (4), wherein the actuating means (5) is compressed in the scope of the electrical contacting of the contact element with the connecting element (4) against the actuating force exerted by this actuating means, wherein an actuating means (5) configured as a compression spring or comprising a compression spring is used, wherein a compression spring configured in the shape of a ring or screw is used,
**characterised in that**
the compression spring is arranged circumferentially around the contact element (3) on the energy storage unit.

10. Method according to claim 9,
**characterised in that**
an electrically conductive adhesive formed from an adhesive material, which softens when an adhesive-specific softening temperature is exceeded, is used, wherein the adhesive force exerted between the contact element on the component and the connecting element (4) by means of the electrically conductive adhesive is greater than or equal to the actuating force exerted by the actuating means (5) when below the softening temperature, and less than the actuating force exerted by the actuating means (5) when above the softening temperature.

11. Method according to claim 9 or 10,
**characterised in that**
a thermally curable electrically conductive adhesive is used, wherein initiation of the curing process takes place when an adhesive-specific curing temperature is exceeded.

12. Method according to claims 10 and 11
**characterised in that**
the curing temperature lies below the softening temperature.

13. Method according to any one of claims 9 to 12,
**characterised in that**
after application of the electrically conductive adhesive onto corresponding joining surfaces provided on the contact elements on the component and on the connection element (4), in a first phase mechanical joining or contacting of the contact elements of the component with the electrical connection element (4) and partial curing of the electrically conductive adhesive, particularly with energetic radiation, preferably heat radiation, being supplied, are carried out, so as to produce an adhesive force which compensates for the actuating force exerted by the actuating means (5), so that electrical as well as mechanical contracting or connection is also established between the contact elements on the component and the electrical connection element (4), and further, optionally full, curing of the electrically conductive adhesive is carried out in a second phase following the first phase, in particular without energetic radiation being supplied.

## Revendications

1. Dispositif de sécurité (1) pour un agencement constitué d'au moins un composant électrique, qui comporte au moins un élément de contact électrique et qui est un accumulateur d'énergie électrique, et d'au moins un élément de liaison électrique (4), notamment du type rail, dans lequel l'élément de contact côté composant doit être ou est relié à l'élément de liaison électrique (4) au moyen d'un adhésif électriquement conducteur, dans lequel au moins un moyen de positionnement (5) est agencé entre le composant et l'élément de liaison électrique (4), moyen de positionnement par l'intermédiaire duquel une force de positionnement éloignant le composant et l'élément de liaison électrique (4) l'un de l'autre peut être exercée, le moyen de positionnement (5) étant conçu comme un ressort de pression ou comprenant un ressort de pression et le ressort de pression étant conçu en forme d'anneau ou d'hélice,
**caractérisé en ce que** le ressort de pression est agencé tout autour de l'élément de contact côté accumulateur d'énergie (3).

2. Dispositif de sécurité selon la revendication 1, **caractérisé en ce que** l'adhésif électriquement conducteur est en un matériau adhésif qui se ramollit lors du dépassement d'une température de ramollissement spécifique à l'adhésif, la force d'adhérence exercée par l'adhésif électriquement conducteur entre l'élément de contact côté composant et l'élément de liaison (4) étant, au-dessous de la température de ramollissement, supérieure ou égale à la force de positionnement exercée par le moyen de positionnement (5) et, au-dessus de la température de ramollissement, inférieure à la force de positionnement exercée par le moyen de positionnement (5).

3. Dispositif de sécurité selon l'une des revendications précédentes, **caractérisé en ce que** l'adhésif électriquement conducteur est thermodurcissable, un déclenchement du processus de durcissement se produisant lorsqu'une température de durcissement spécifique à l'adhésif est dépassée.

4. Dispositif de sécurité selon la revendication 2 ou 3, **caractérisé en ce que** la température de durcissement est inférieure à la température de ramollissement.

5. Dispositif de sécurité selon l'une des revendications précédentes, **caractérisé en ce que** l'adhésif électriquement conducteur est en une matière synthétique thermoplastique ou comprend une matière synthétique thermoplastique.

6. Dispositif de sécurité selon l'une des revendications précédentes, **caractérisé en ce que** le ressort de pression est en un matériau électriquement isolant, notamment un élastomère.

7. Dispositif de sécurité selon l'une des revendications précédentes, **caractérisé en ce qu'**il comporte d'une partie de caisson remplie d'un gaz protecteur électriquement isolant.

8. Agencement d'accumulateur d'énergie, comprenant un dispositif de sécurité (1) selon l'une des revendications précédentes.

9. Procédé destiné à la mise en contact électrique d'un élément de contact électrique d'un composant électrique, à savoir un accumulateur d'énergie électrique (2), avec un élément de liaison électrique (4) au moyen d'un adhésif électriquement conducteur, dans lequel au moins un moyen de positionnement (5) est agencé entre le composant et l'élément de liaison électrique (4), moyen de positionnement par l'intermédiaire duquel une force de positionnement éloignant le composant et l'élément de liaison électrique (4) l'un de l'autre peut être exercée, le moyen de positionnement (5) étant comprimé dans le cadre de la mise en contact électrique de l'élément de contact avec l'élément de liaison (4) contre la force de positionnement exercée par celui-ci, un moyen de positionnement (5) qui est conçu comme un ressort de pression ou qui comprend un ressort de pression étant utilisé et un ressort de pression conçu en forme d'anneau ou d'hélice étant utilisé,
**caractérisé en ce que** le ressort de pression est agencé tout autour de l'élément de contact côté accumulateur d'énergie (3).

10. Procédé selon la revendication 9, **caractérisé en ce qu'**on utilise un adhésif électriquement conducteur en un matériau adhésif qui se ramollit lors du dépassement d'une température de ramollissement spécifique à l'adhésif, la force d'adhérence exercée par l'adhésif électriquement conducteur entre l'élément de contact côté composant et l'élément de liaison (4) étant, au-dessous de la température de ramollissement, supérieure ou égale à la force de positionnement exercée par le moyen de positionnement (5) et, au-dessus de la température de ramollissement, inférieure à la force de positionnement exercée par le moyen de positionnement (5).

11. Procédé selon la revendication 9 ou 10, **caractérisé en ce qu'**on utilise un adhésif électriquement conducteur thermodurcissable, un déclenchement du processus de durcissement se produisant lorsqu'une température de durcissement spécifique à l'adhésif est dépassée.

12. Procédé selon la revendication 10 ou 11, **caractérisé en ce que** la température de durcissement est inférieure à la température de ramollissement.

13. Procédé selon l'une des revendications 9 à 12, **caractérisé en ce que**, après l'application de l'adhésif électriquement conducteur sur des surfaces d'assemblage correspondantes prévues du côté des éléments de contact côté composant et du côté de l'élément de liaison électrique (4), on effectue dans une première phase un assemblage ou mise en contact mécanique des éléments de contact côté composant avec l'élément de liaison électrique (4) et un durcissement partiel de l'adhésif électriquement conducteur, notamment avec un apport d'un rayonnement riche en énergie, de préférence un rayonnement de chaleur, de telle sorte qu'une force d'adhérence est réalisée, laquelle compense la force de positionnement exercée par le moyen de positionnement (5) de telle sorte qu'une mise en contact ou liaison aussi bien électrique que mécanique est établie entre les éléments de contact côté composant et l'élément de liaison électrique (4) et, dans une deuxième phase qui fait suite à la première phase, on effectue un nouveau durcissement, éventuellement complet, de l'adhésif électriquement conducteur, notamment sans apport de rayonnement riche en énergie.
